# EUROPEAN PATENT SPECIFICATION

(11) **EP 0 462 839 B1**
(45) Date of publication and mention of the grant of the patent: **01.03.1995**
(21) Application number: 91305606.5
(22) Date of filing: 20.06.1991
(51) Int. Cl.: H01R 25/14, H01R 13/627, H02B 1/06

(54) **Securing of electrical accessories**
Befestigung von elektrischen Zubehörteilen
Fixation d'accessoires électriques

(30) Priority: 21.06.1990 GB 9013837; 09.11.1990 GB 9024464; 17.04.1991 GB 9108175
(43) Date of publication of application: 27.12.1991
(73) Proprietor: ASHLEY & ROCK LIMITED, Ulverston Cumbria LA12 9BN (GB)
(72) Inventor: Russam, Victor, Ulverston, Cumbria LA12 9EZ (GB); Patton, Stuart, Ulverston, Cumbria LA12 0JA (GB)
(74) Representative: McNeight, David Leslie

(56) References cited:
- EP-A- 0 246 154
- EP-A- 0 351 083
- US-A- 3 838 381

## Description

This invention relates to electrical accessories intended for use in mains distribution systems and has particular reference to securing electrical accessories to ledges or flange formations, typically spaced outwardly-directed flange formations as provided by inverted top-hat section DIN-rails, though not limited thereto.

One mains distribution system with such requirements is of a busbar-in-trunking type where outer trunking, which can advantageously be of electrically insulating material, houses continuous runs of mains conductors, normally for earth, neutral and at least one live connection, and allows electrical accessories to be placed at intervals along the length of the trunking, preferably at will. It is an object of this invention at least to facilitate such mounting and demounting of accessories.

According to this invention there is provided an electrical accessory mounting system wherein a body of the electrical accessory is to extend from at least one outwardly directed ledge or flange formation, preferably between two such ledge or flange formations, and comprising, for securing to the or at least one said ledge or flange formation, a latch member associatable with said body for movement, advantageously angular, relative thereto and having a securing part for engaging and disengaging said ledge or flange formation according to position and movement of said latch member relative to said body.

A preferred latch member is pivotal relative to the accessory body, but could rely on flexure only, and can conveniently be of generally U-configuration for association with the body by its arms and with its bight affording cord receiving part. Such a latch member may further have one or more of features including interference or snap-fitting latching in its said engaging position, extension by which it is at least forcibly releasable from its said engaging position, and retention of its pivotal association with said body by interfitting of two parts of the body.

Another application for mounting and demounting provisions of this invention is in a specially adapted wall-mounting box provided with inner formation(s) presenting spaced outwardly directed mounting flanges, conveniently of an insert fitting between normal accessory face plate attachment provisions.

Specific implementation for this invention will now be described, by way of example, with reference to the accompanying drawings, in which:
Figure 1 shows an assembled electrical accessory, specifically a rocker switch equipped with latch members 10,10′ for its body part 20;
Figures 2A-2C constitute an exploded view for all parts of the switch of Figure 1;
Figures 3A-3C show subassemblies of parts involved in Figures 1A-1C, respectively;
Figures 4A and B are side and details views of variant clips 110,110′ and accessory body part 120;
Figures 5A and B are end and side views of a clip of Figure 4;
Figure 6 is a section through trunking having an accessory mounted therein;
Figures 7A and B are top and sectional views of a flanged insert for an accessory mounting box;
Figures 8A,B and C show fixing an accessory to the insert, a cover to the insert, and the insert into a mounting box, respectively;
Figures 9A and B show part-long and transverse sections of a rocker switch and neon tell-tale unit;
Figures 10A,B and C show plan, side and end views of the neon tell-tale unit;
Figures 11A,B and C show plan, side and end views of a rocker counterbalancing insert;
Figures 12A,B show end parts of a multicomponent accessory mounting insert;
Figures 13A and B show plan and end views of a base part of that insert;
Figures 14A and B show plan and section views of a switch base with locating formations; and
Figures 15A-F show alternative cover/base plate systems.

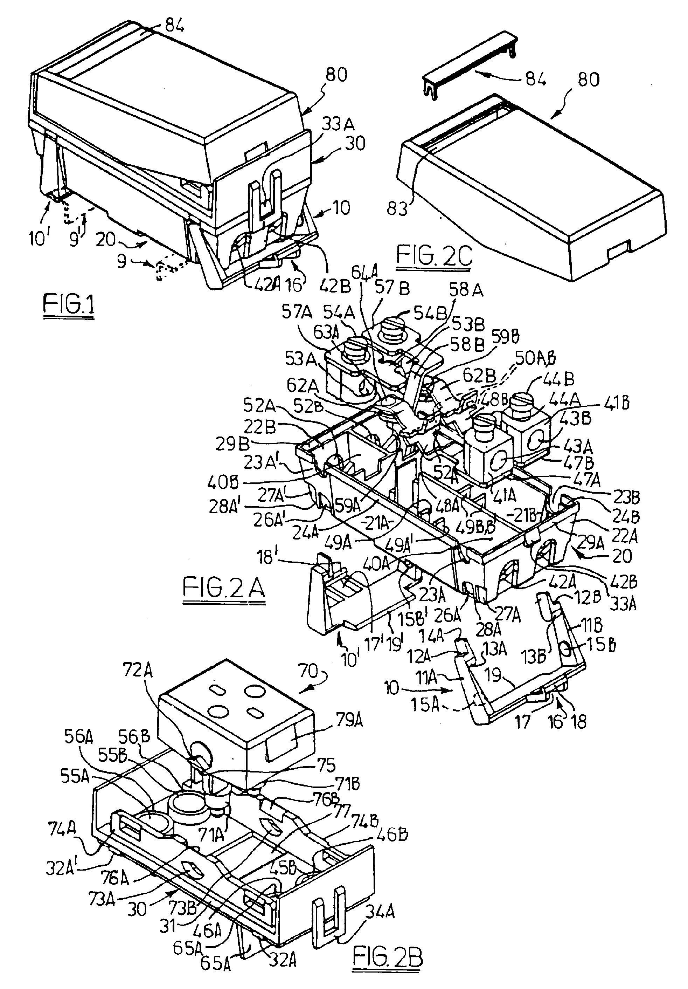

Referring first to Figures 1, 2A and 3A, latch members 10,10′ are of generally U-configuration with limbs 11A,B stepped inwardly (12A,B) at their free ends to provide lower semi-cylindrical surfaces 13A,B and upwardly directed inset lugs 14A,B. Limbs 11A,B also carry inwardly projecting latching edges 15A,B. Bight portions of the latch members have outward extensions 16 of generally U-configuration presenting an aperture 17 and a bight 18A,B, and inward extensions 19A,B. The bights 18A,B are shown upstanding, but need not be so, indeed could depend downwardly.

Lower body part 20 of the electrical accessory, specifically switch unit, is shown of dished configuration, actually open-topped box-shape with upstanding outwardly diverging side walls 21A,B and end walls 22A,B. The side walls 21A,B are shown with slots 23A,B (and 23A′,B′) from their outset upper rims 24A,B to semi-circular surfaces 25A,B in which the semi-cylindrical surfaces 13A,B will bear for pivotting of the latch members 10,10′ relative to the body part 20 with the teeth 14A,B inside the rims 24A,B. The side walls 21A,B further have lower recesses 26A,B, shown as holes directly below the slots 23A,B beyond indents 27A,B and retaining rib formations 28A,B.

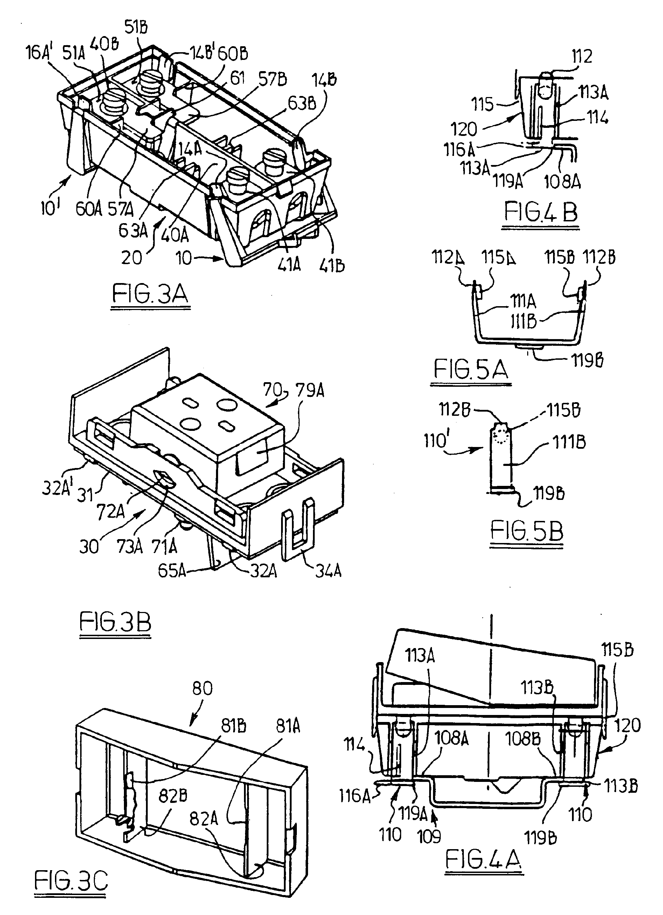

The latch members 10,10′ can pivot into and out of their engagement positions with studs 15A,B in recesses 26A,B and involving passing over ribs 28A,B. Figures 1 and 3A show the engaged position for the latching member 10′ and the disengaged position for the latching member 10. A tool, such as a screw driver blade inserted into holes 17,17′ can be used to get at least disengagement after engagement. Engagement will actually be relative to ledges or flange formations (9,9′) under which the projections 19,19′ will pass, preferably with at least resilient grip, if not latching, on undersides of the ledges or flange formations.

Retention of the latching members 10 and 10′ in the slots 23A, B and 23A′, B′ is assured by an upper body part 30 of the electrical accessory, specifically switch, for which the upper body part 30 comprises a plate 31 fitting inside the outset rims 24A,B of the side walls 21A, B, also further outset rims 29A, B for the end walls 22A, B of the lower body part, and lugs 32A, B and 32A′,B′ going into the rim slots 23A,B of rims 24A, B. Snap-fitting of the upper body part 30 to the lower body part 20 is shown by way of chamfered teeth 33A, B of the latter and chamfered bights of external depending U-formations 34A, B of the former.

(Not all of subscript 'B' items are shown, but are specified for the sake of indicating completeness of correspondence of parts.)

It will be appreciated that first and second accessory body parts may fit together differently, for example permanently or semi-permanently glued or welded. Also, the particular electrical accessory concerned is immaterial, and could just as well be an electrical socket or a spur connection or whatever.

Alternative clips 110,110′ are shown in Figures 4 and 5 fitted to a variant body part 120. The clips 110,110′ are also each of generally U-shape with limbs 111A,B extending from bights 113A,B to tapered free ends 112A,B having inwardly directed circular-section studs 115A,B to engage in corresponding recesses or holes in the body part 120 at upper ends of grooves 113A,B formed in sides of the body part 120 from its bottom upwards. Bights 113A,B have projections 119A,B to engage under ledge or flange formations, shown as flanges 108A,B of a rail 109. One of the clips 110′ is shown with solid limbs 111B and simply fits simply in the grooves 113B. The other clip 110 is shown with slotting 114 of its limbs 111A which also fit snugly in the grooves 113A but permit flexing of a generally pivotal nature for their parts carrying the projection 119A. Fitting of the accessory body part 120 to the rail 109 is conveniently by attaching the clips 110,110′ to the body part 120, say of snap-fits, and engaging the projection 119B under the rail flange 108B before snapping the projection 119A past the other rail flange 108A. Release can be aided as for Figures 1 to 3 by extension 116A indicated dashed in Figures 4A and B that can be U-configuration for engagement by a tool. Retention of the clips could further rely on their tapered free ends 112S,B being positively engaged by accessory parts, see dashed in Figure 4B.

A further alternative, would be for either of the clips 10 or 10′ and the clip 110′ to be replaced by a fixed indent tooth formation on the bottom of the accessory body 20 or 120, its undercut serving to edge engage over the mounting ledge or flange.

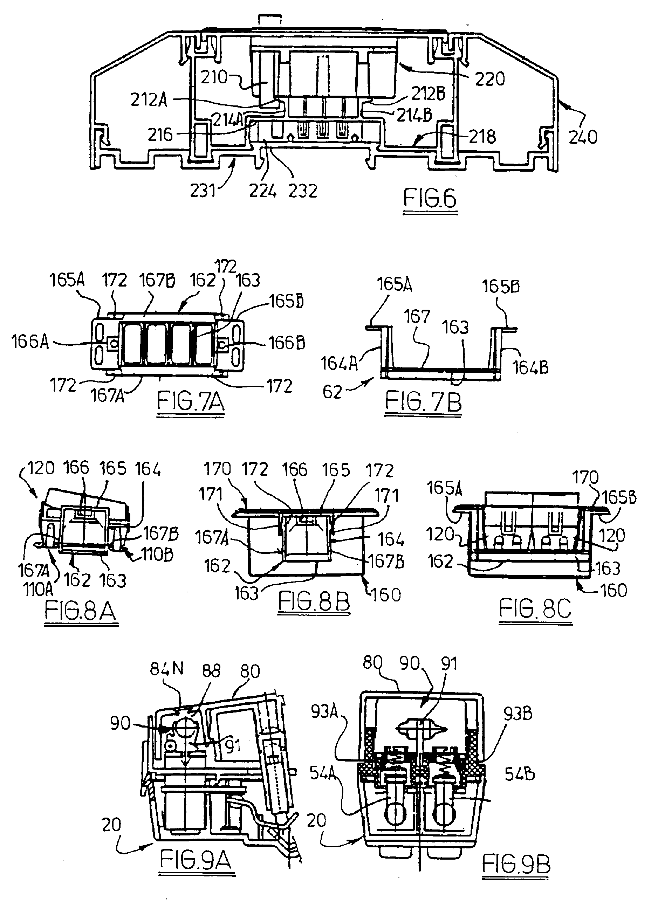

Figure 6 shows only one clip 210, and diagrammatically, for one end of body 220 of a socket type accessory mounted by flanging 212A,B of upstands 214A,B from a platform 216 of a channel-section insulating extrusion 218. The platform 216 has a recess 222 to its other side that covers an insulating busbar strip 224 for busbar conductors 226A,B,C shown of channel-section in grooves 228A,B,C along the strip 224 for mains live neutral and earth (not necessarily in that order). Long multi-prong resilient connection pins are shown extending from the accessory body 220 into the busbar conductors 226, though an adaptor could be used instead, say with connector pins going into the accessory body as well as into the busbar conductors.

The busbar strip 224 is shown with snap-on capture at 230A,B to another raised platform 232, this time of a base member 231 of trunking 240. Features of this trunking 240 form subject matter of our copending European Patent Application 91303434.4 which may be consulted for further detail description.

Turning to Figures 7 and 8, an alternative context for use of pivotting clips is a wall-mounting accessory box, see 160 in Figures 8B, C, then by way of an insert 162. The insert 162 has a base 163, shown apertured, extending between upstanding ends 164A, B to upper flanges 165A,B that go over upper edges of opposite side walls of the box 160 and carry conventional screw ears (not shown) internally for accessory plate screws. The insert ends 164A, B have registering formations 166A,B for such box screw ears. Along its sides, the insert 162 has outwardly extending flanges 167A,B for securement of accessory bodies 120 thereto using pivotting clips 110A,B, two switch type bodies being shown.

Inside the box 160, there is ample room below and to each side of the insert 162 for tracking mains wiring, and for swinging release of the clips 110. An accessory cover, say for a double rocker switch, is shown at 170 with toothed capture legs 171 cooperating for retention purposes with toothed formations 172 of ends of the insert 162.

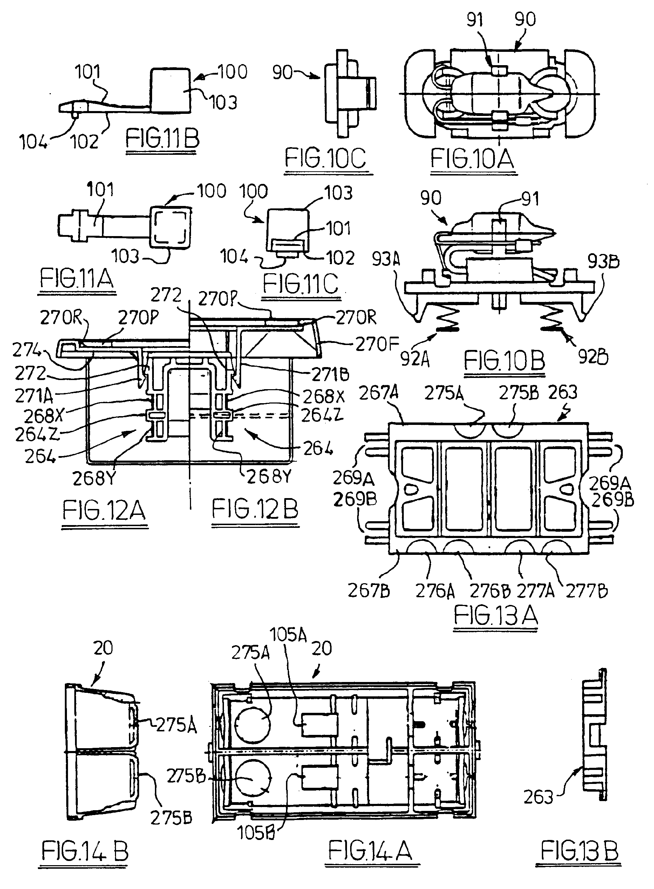

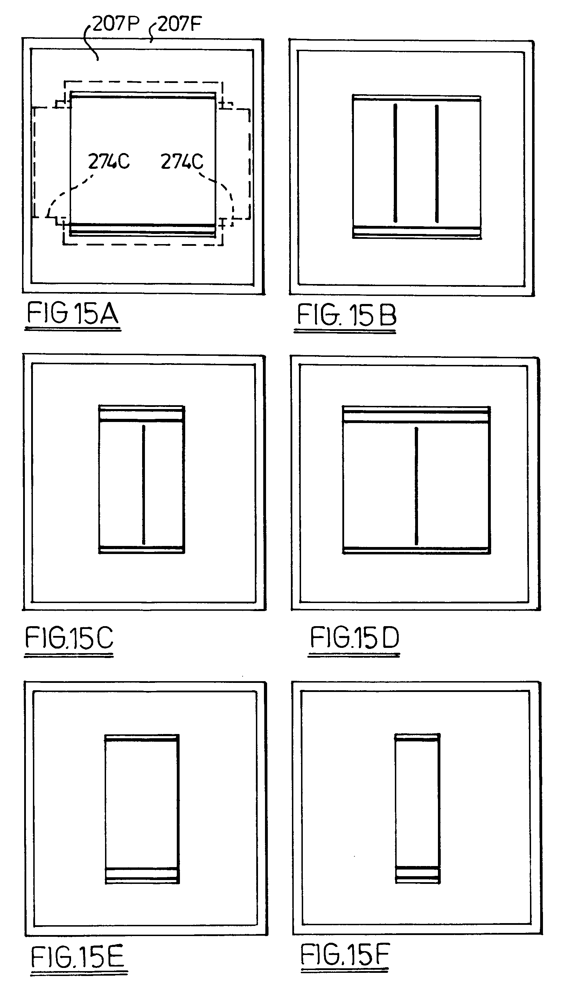

A particularly useful variation on the insert 162 is as a multipart construction having two end parts that may be identical and a base part that may push fit to the two end parts, advantageously at alternative positions along the end parts. Figures 12 and 13 shown one specific embodiment by way of preferred inverted U-shaped end parts 264 having alternative securement ribs 268 X, Y in each limb, and a base part 263 side-flanged at 267A,B and having paired end extensions 269A, B each with one extension shown end-toothed to snap-fittingly grip onto the securement ribs 268 X,Y. The purpose of such provisions is to enable installation onto accessory boxes of different depths, for which a minimum is indicated dashed on Fig. 12B and available by trimming the limbs of the end parts 264 at 264Z. For use of the same accessory, in this that of Figures 1 to 3, a thicker frame member 270F is shown for a preferred two-part accessory cover of which face plates 270P snap fit into rebating 270R of the frame member 270F. Clip-in legs 271B for teeth 272 will also be correspondingly longer than (271A) a minimum depth accessory cover as shown in Fig. 12A, for which its frame member rebating will produce in inner edge part 274 not thinner than upper flanging (165A,B in Figure 7B) of the end parts 264 and cut out (274C) to accommodate same, see dashed in Figure 15A. A further advantageous feature for base parts of multipart accessory box inserts is side rail surface formations to mate for locating purpose with bottom formation of the accessory concerned. That is indicated as indenting at 275A, B on one rail for one central accessory body and at 276A,B and 277A,B for two accessory bodies on the other rail, the base part 283 being reversable in the end part 264 as to which rail is uppermost and the accessory bodies having mating proud formatiions 278A,B. For accessory boxes other than a square one as one of the standards in current UK practice, for example oblong or so-called double or even triple boxes, the base part 273 can be longer and have more accessory locating formations 275-277. Variant accessory positions and fixed plates are indicated in Figures 15A-F for a square box and cover.

As an electrical accessory, including particularly as a switch unit, the accessory shown in Figures 1 to 3 has various advantageous aspects in its own right, whether as to its longitudinally divided nature, see interrupted partition 40A,B, or as to other features and, whether of specific or mere gerneral application

To each side of the longitudinal partition and at one end of the compartments so formed are terminal blocks 41A,B shown of screw-clamp type for wires entrant end-holes 42A,B in lower body part ends 22A,B and holes 43A,B of the blocks 41A,B. Clamp screws 44A,B are accessible through holes 45A,B in the upper body part plate 31, actually shown within upstanding necks 46A,B. The terminal blocks 41A,B have extending from their bottoms conducting spring plates 47A,B having reduced width and downwardly V-formed parts 48A,B, and full-width free edges 50A,B fitting in slotted cross partitions 49A,B and 49A′,B′.

At their other ends, the compartments flanking the partition 40 have terminal blocks 51A, B generally similar to those 41A,B and with similar related means referenced 52-56A, B. From tops of the terminal blocks 51A,B, conducting spring plates 57A,B extend with offset downwards and sideways extensions 58A, B to fixed contacts 59A, B each in the other compartment and resting on the bottom of the lower body part 20. Sideways extensions 58A, B are protected by slotted insulating cross partitioning 60A, B and 61.

Rocking conducting spring plates 62A,B use free edges 50A,B of the contacts 47A,B as fulcrums at downwardly U-bent parts thereof with lowermost extensions to fit between the partitions 49A,A′ and 49B,B′, beyond which extend free edges 63A,B and actual contacts 64A,B capable of rocking into and out of engagement with the fixed contacts 59A,B respectively from above, and correspondingly out of and into contact at their other side with undersides of first extensions of the plates 57A,B respectively from below. The plate 31 has depending insulating plates 65A,B to fit each side of the partition 40 and give insulating shielding for the terminal blocks 41A,B.

Arrangement of contacts 59A,B and 64A,B relative to terminal blocks 41A,B and 51A,B and conducting plates 57A,B in compartments to each side of the partition 40 allow the illustrated switch unit to be used as a single intermediate type switch. Two-way switch action will use both of the terminal blocks 51A,B and only either one of the terminal blocks 41A,B for connections. Two one-way switches are available if the plates 57A,B extend only outwardly or if the extensions 58A,B go only downwards i.e. not also sideways, and independently if the moving contacts are separately operable.

Arrangements for all mains clamp screws to be accessible at tops of the accessory and/or for access of mains wires at ends is or are advantageous in themselves.

For a single intermediate switch unit, as actually illustrated, there will be common activation of the two moving contacts using a single rocker unit 70 having effectively ganged spring plungers 71A,B. Rocking location is by way of snap-fitting triangular side projections 72A,B in sectoral apertures 73A,B in upstanding side walls 74A,B of the upper body part 30, aided by chamfers 75A,B and 76A,B respectively. The plate 31 is centrally apertured at 77 to accommodate the rocker plungers 71A,B.

A two-way switch for optionally one- or two-way use, as is common in the industry, could, of course, omit one of the terminal blocks 41A,B with its stationary contact plate 48A,B and the corresponding moving contact 62A,B, also the sideways extension 58B,A into its compartment from the terminal block 51B,A of the other compartment. Then, rather than omit the corresponding plunger 71A,B, but still to give much the same 'feel' to operation of the rocker unit 70, there is a feature or aspect hereof that has merit in itself, i.e. of much more general applicability than the specific switch being described. That feature or aspect concerns a rocker or counterbalancing member insertable into a switch compartment instead of one or more contact member to offer a surface substantially corresponding to a locus of movement of a rocker plunger tip in operating absent said one or more contact members, i.e. as though present. Figures 11A,B,C show such a member 100 having an elongated profiled upper surface 101 providing said locus, and on elongate flat bottom surface 102 to fit snugly in place of one of the stationary contacts 48A,B. A hollow cuboid end part 103 enables fitting in place of the corresponding terminal block 41A,B, and a bottom peg 104 can assist location by mating with recessing (105A,B in Figure 14A) of the base of the lower body part 20 for the stationary contact on which the moving contact pivots.

For two independent one-way switches, two rocker members will be required, for example replacing the rocker member 70 by two narrower members with either of mutual capture formations permitting relative rotation in the rocking axis or common capture of a rotation permitting part which could be as simple as a pin. An alternative would be to use a modified upper body part with a central formation affording sectoral recesses to each side for opposing further triangular projections of the two narrower rocker members.

Another feature of such switches is that the actual hollow rocker head 80 is made separate from the rocker unit 70 and fits thereto, preferably as a snap-fit using cooperating chamfered teeth 79A,B and 81A,B of ends of the rocker unit and internal partitions 82A,B of the hollow head, respectively.

A further feature of such hollow rocker heads is provision for a lens or indicator or merely decorative insertion, see full width slot 83 and corresponding insert 84. Access to mains clamp screws is readily available simply by removing the rocker head.

A neon unit is highly advantageous associated with terminal block screws under the rocker head or cover 80, which, as shown, will be for the terminal screws 54A,B. Such a neon unit is shown at 90 in Figures 9A, B and 10A, B, C. The unit 90 has a neon holder clip 91 with spring contacts 92A,B down to screw heads of terminal blocks 51 and an interference or snap fit location 93A,B to the neck 56. Snap-fit of the neon lens 84N is also shown by way of resilient bifurcations 88 which be outwardly end-toothed for cooperation in interior ribbings 86.

## Claims

1. An electrical accessory mounting system wherein a body (20; 120; 220) of the electrical accessory (30) is to extend from at least one outwardly directed ledge or flange formation (9,108,165; 212A,B), usually between two such ledge or flange formations (9,9′; 108A,B; 165A,B), the system comprising, for securing to the or at least one said ledge or flange formation (9,9′; 108A,B; 165A,B; 212A,B), a latch member (10,10′; 110,110′; 210) associable with said body (20; 120; 220) for movement relative thereto and having a securing part (19,19′; 119,119′) for engaging and disengaging said ledge or flange formation (9,9′; 108A,B; 165A,B; 212A,B) according to position and movement of said latch member (10,10′; 110,110′; 210) relative to said body (20).

2. A system according to claim 1, wherein at least one said latch member (110) is snugly locatable in grooving (113A) of the body (120) and is of slotted (114) formation for resilient flexure in movement of its said securing part (119A) out of engaging said ledge or flange formation (108A).

3. A system according to claim 1, wherein association of the or each latch member (10,10′) with said body (20) is pivotal.

4. A system according to claim 3, wherein said body (20) has formations (26-28) cooperating with said latch member (10) to retain the latter in engagement with said ledge or flange formation (9).

5. A system according to any preceding claim, wherein the or each latch member (10,10′; 110,110′; 210) is of generally U-configuration for association with said body (20; 120; 220) by its arms (11A,B) and with its bight affording said securing part (19,119).

6. A system according to any preceding claim, wherein the or each latch member (10,10′; 110,110′) has an extension (16; 116) by which it is disengaged from the body (20; 120).

7. A system according to any preceding claim, wherein parts (23,24) of said body (20) and parts of (12-14) the or each latch member (10,10′) cooperate to retain the or each latch member (10,10′) to said body (20).

8. A system according to any preceding claim, wherein spaced said ledge or flange formations (108A,B; 212A,B) are of trunking (109) for electrical supply wiring and for receiving electrical accessories.

9. A system according to claim 8, wherein the spaced ledge or flange formations (212A,B) are above an electrical supply busbar (124) permitting accessory connection by way of contact pins.

10. A system according to any one of claims 1 to 7, wherein said ledge or flange formations (165A,B; 275A,B) are of an insert (162;262)) for an accessory mounting box (160).

11. A system according to claim 10, wherein the insert (262) is of multipart construction comprising end parts (274) and a base part (273) interfittable with the end parts.

12. A system according to claim 11, wherein the end parts (274) offer alternative fitting positions (268 X, Y) for receiving the base part (273).

13. A system according to claim 12, wherein different thickness of accessory covers (270A, B) are used according to which of said fitting positions (268X, Y) is employed.

14. A system according to any one of claims 10 to 13, wherein a or said accessory cover has a part (270F) with legs to clip onto the insert (162; 262).

15. A system according to claim 14 wherein the accessory cover part (270F) is a frame indented for taking flat face plates (270P).

## Patentansprüche

1. Befestigungssystem für elektrische Zubehörteile, in dem ein Körper (20;120;220) des elektrischen Zubehörteils (30) sich von wenigstens einer nach außen gerichteten vorstehenden Rand- oder Flanschgestaltung (9,108,165;212A,B) erstreckt, gewöhnlich zwischen zwei derartigen Rand- oder Flanschgestaltungen (9,9′;108A,B;165A,B), wobei das System zum Befestigen an der oder wenigstens einen Rand- oder Flanschgestaltung (9,9′;108A,B;165A,B;212A,B) ein mit dem Körper (20;120;220) verbindbares Verriegelungsglied (10,10′;110,110′;210) aufweist für eine Bewegung relativ hierzu und das ein Befestigungsteil (19,19′;119,119′) hat, um mit der Rand- oder Flanschgestaltung (9,9′;108A,B;165A,B;212A,B) in Eingriff oder außer Eingriff zu sein entsprechend der Position und Bewegung des Verriegelungssgliedes (10,10′;110,110′,210) relativ zum Körper (20).

2. System nach Anspruch 1, worin wenigstens ein Verriegelungsglied (110) gut sitzend in Nuten (113A) des Körpers (120) anzuordnen ist und eine geschlitzte Ausbildung (114) aufweist zum flexiblen Biegen bei der Bewegung seines Befestigungsteils (119A) außer Eingriff mit der Rand- oder Flanschgestaltung (108A).

3. System nach Anspruch 1, worin die Verbindung des oder jedes Verriegelungsgliedes (10,10′) mit dem Körper (20) schwenkbar ist.

4. System nach Anspruch 3, worin der Körper (20) mit dem Verriegelungsglied (10) zusammenarbeitende Formationen (26-28) hat, um das letztere in Eingriff mit der Rand- oder Flanschgestaltung (9) zu halten.

5. System nach einem der vorhergehenden Ansprüche, worin das oder jedes Verriegelungsglied (10,10′;110;110′;210) im allgemeinen U-förmig ist für die Verbindung mit dem Körper (20;120;220) durch seine Arme (11A,B), wobei seine Einbuchtung das Befestigungssteil (19,119) liefert.

6. System nach einem der vorhergehenden Ansprüche, worin das oder jedes Verriegelungsglied (10,10′;110,110′) eine Verlängerung (16;116) hat, durch die es außer Eingriff mit dem Körper (20;120) gebracht ist.

7. System nach einem der vorhergehenden Ansprüche, worin Teile (23,24) des Körpers (20) und Teile (12-14) des oder jedes Verriegelungsgliedes (10,10′) zusammenwirken, um das oder jedes Verriegelungsglied (10,10′) am Körper (20) zu halten.

8. System nach einem der vorhergehenden Ansprüche, worin im Abstand angeordnete Rand- oder Flanschgestaltungen (108A,B;212A,B) für den Empfang elektrischer Zubehörteile ist.

9. System nach Anspruch 8, worin die im Abstand angeordneten Rand- oder Flanschgestaltungen (212A,B) oberhalb einer elektrischen Versorgungs-Sammelschiene (124) sind, wodurch eine Zubehörverbindung mittels Kontaktstiften möglich ist.

10. System nach einem der Ansprüche 1 bis 7, worin die Rand- oder Flanschgestaltungen (165A,B;275A,B) ein Einsatz für einen Zubehörbefestigungskasten (160) sind.

11. System nach Anspruch 10, worin der Einsatz (262) eine Mehrteilkonstruktion ist mit Endteilen (274) und einem mit den Endteilen zusammenpassenden Basisteil (273).

12. System nach Anspruch 11, worin die Endteile (274) alternative Montagepositionen (268X,Y) zum Empfang des Basisteils (273) bieten.

13. System nach Anspruch 12, worin unterschiedliche Dicken von Zubehörabdeckungen (270A,B) verwendet werden, gemäß denen die Montagepositionen (268X,Y) benutzt werden.

14. System nach einem der Ansprüche 10 bis 13, worin eine oder die Zubehörabdeckung ein Teil (270F) mit Beinen zum Anklammern an dem Einsatz (162;262) hat.

15. System nach Anspruch 14, worin das Zubehörabdeckteil (270F) ein Rahmen ist, der eingedrückt ist, um flache Planscheiben (270P) zu machen.

## Revendications

1. Système de montage d'un accessoire électrique dans lequel un corps (20 ; 120 ; 220) de l'accessoire électrique (30) doit s'étendre à partir d'au moins une structure de rebord ou de bride (9, 108, 165 ; 212A, B) orientée vers l'extérieur, habituellement entre deux tels rebords ou brides (9, 9′ ; 108A, B ; 165A, B), le système comprenant pour l'attachement sur ce rebord ou bride (9, 9′ ; 108A, B ; 165A, B ; 212A, B) un élément de verrouillage (10, 10′ ; 110, 110′ ; 210) qui peut être associé audit corps (20 ; 120 ; 220) afin de se déplacer par rapport à celui-ci et présentant un partie d'attache (19, 19′ ; 119, 119′) pour engager et dégager le rebord ou la bride (9, 9′; 108A, B ; 165A, B ; 212A, B) selon la position et le déplacement de l'élément de verrouillage (10, 10′; 110, 110′; 210) par rapport au corps (20).

2. Système selon la revendication 1, dans lequel au moins un élément de verrouillage (110) peut être mis en place par serrage dans une rainure (113A) du corps (120) et présente une fente (114) pour se plier de manière élastique lors du déplacement de sa partie d'attache (119A) en dégagement du rebord ou de la bride (108A).

3. Système selon la revendication 1, dans lequel l'association du ou de chaque élément de verrouillage (10, 10′) avec le corps est pivotante.

4. Système selon la revendication 3, dans lequel le corps (2) présente des formations (26-28) coopérant avec l'élément de verrouillage (10) pour retenir ce dernier en engagement avec le rebord ou la bride (9).

5. Système selon l'une quelconque des revendications précédentes, dans lequel le ou chaque élément de verrouillage (10, 10′; 110, 110′; 210) a en général une forme de U pour l'association avec le corps (20 ; 120 ; 220) par ses bras (11A, B), et avec son anse recevant la partie d'attache (19, 119).

6. Système selon l'une quelconque des revendications précédentes, dans lequel le ou chaque élément de verrouillage (10, 10′; 110, 110′ ; 210) présente un prolongement (16 ; 116) au moyen duquel il est dégagé du corps (20; 120).

7. Système selon l'une quelconque des revendications précédentes, dans lequel des parties (23, 24) du corps (20) et des parties (12-14) du ou de chaque élément de verrouillage (10, 10′) coopèrent pour maintenir le ou chaque élément de verrouillage (10, 10′) sur le corps (20).

8. Système selon l'une quelconque des revendications précédentes, dans lequel les rebords ou brides (108A, B ; 212A, B) espacés appartiennent à un coffrage (109) pour les câbles d'alimentation électrique et pour recevoir des accessoires électriques.

9. Système selon la revendication 8, dans lequel les rebords ou brides (212A, B) espacés sont agencés au-dessus d'une barre de bus (124) d'alimentation électrique permettant le raccordement des accessoires au moyen de fiches de contact.

10. Système selon l'une quelconque des revendications 1 à 7, dans lequel les rebords ou brides (165A, B ; 275A, B) appartiennent à un insert (162 ; 262) pour un boîtier (160) de montage d'accessoires.

11. Système selon la revendication 10 dans lequel l'insert (262) a une construction en plusieurs parties comprenant des parties d'extrémité (274) et une partie de base (273) qui peut être assemblée aux parties d'extrémité.

12. Système selon la revendication 11, dans lequel les parties d'extrémité (274) offrent des positions d'assemblage alternatives (268X, Y) pour recevoir la partie de base (273).

13. Système selon la revendication 12, dans lequel on utilise des couvercles à accessoires de différentes épaisseurs (270A, B) selon celle des positions d'assemblage (268X, Y) que l'on emploie.

14. Système selon l'une quelconque des revendications 10 à 13, dans lequel le couvercle à accessoires présente une partie (270F) avec des branches destinée à être serrée sur l'insert (162; 262)

15. Système selon la revendication 14, dans lequel la partie (270F) formant couvercle à accessoires est un cadre qui présente des découpes pour réaliser des plaques (270P) à face plane.
